# EUROPEAN PATENT APPLICATION

(11) **EP 1 672 903 A2**
(43) Date of publication of application: **21.06.2006**
(21) Application number: 05111933.7
(22) Date of filing: 09.12.2005
(51) Int. Cl.: H04N 1/00

(54) **Image Forming Device and Method**

(30) Priority: 16.12.2004 KR 2004106735
(71) Applicant: Samsung Electronics Co., Ltd., Yeongtong-gu Suwon-city, Gyeonggi-do 442-742 (KR)
(72) Inventor: Kim, Yong-im, Seoul (KR); Park, Ji-sub, Gyeonggi-do (KR)
(74) Representative: Walaski, Jan Filip

(57) **Abstract**

The present invention relates to an image forming method usable with an image forming device having a storage medium mounting part to receive image data from a storage medium connectable in the storage medium mounting part and a displaying part to display images that correspond to the received image data, the method comprising: receiving the image data and print information data about whether the images that correspond to the image data received from the storage medium have been printed before; dividing the images into a first group and a second group according to whether the images have been printed before and displaying the images in at least one of the first and second groups of images; printing one or more images selected from among the displayed images; and updating the print information data that corresponds to the printed one or more images in the storage medium.

Accordingly, it is an aspect of the present invention to provide to an image forming device and an image forming method using the same by which a user may easily obtain information about whether images stored in a storage medium have been printed before.

## Description

The present invention relates to an image forming device and an image forming method, and more particularly, to an image forming device and an image forming method to display and record whether images have been printed before.

A printer is typically connected to a host computer such as a personal computer. For example, when a task is performed on an application program running on the host computer, the application program executes a printer driver to print images from the printer. The printer driver is executed according to a user print command. The printer driver translates the images to be printed into a printer language, such as a PCL (Printer Control Language), and transmits the translated images to the printer. The printer then prints the images on sheets of paper.

A printer that can receive image data by being directly connected to a storage medium, such as a digital camera and/or a memory card, without being connected to the host computer, has recently been developed. This printer can print images that correspond to the received image data without having the host computer to relay the image data.

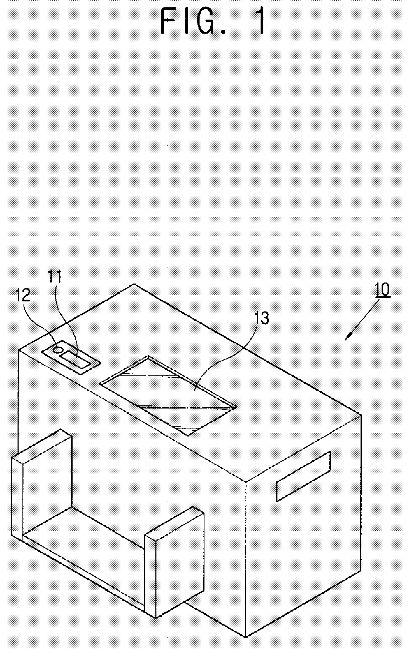

Figure 1 illustrates a conventional printer 10. Referring to Figure 1, the conventional printer 10 comprises a USB (universal serial bus) connector 11 to be connected to a storage medium (e.g., a digital camera) and a connector (not shown) to be connected to a host computer, an adapter 12 to be connected with another storage medium (e.g., a memory card), a display part 13 to display images, and a printing part (not shown) to print the images.

The conventional printer 10 further comprises a controller (not shown) which receives image data from the storage medium that is connected to the USB connector 11 or the adapter 12, controls the display part 13 to display the images that correspond to the received image data, and controls the printing part (not shown) to print images selected by a user.

Accordingly, by using the conventional printer 10, the user may receive the image data directly from the storage medium, such as the digital camera or the memory card, display the corresponding images, select the images to print from among the displayed images, and print the selected images.

However, in the conventional printer 10 described above, the display part 13 displays the images that correspond to the image data without any information about whether the corresponding images have been printed. As a result, the user is required to check every one of the displayed images in order to determine which images have not been printed before (i.e., which images are new images). This is inconvenient, since it takes the user a large amount of time to determine the new images.

The present invention aims to address the above problems.

Accordingly, the present invention provides an image forming device and an image forming method by which a user may easily obtain information about whether images stored in a storage medium have been printed before.

The present invention also provides an image forming device and a image forming method by which a user can quickly print the images selected from displayed images according to the obtained information about whether the images stored in the storage medium have been printed before.

Additional aspects of the present invention will be set forth in part in the description which follows and, in part, will be obvious from the description, or may be learned by practice of the present invention.

The foregoing and/or other aspects of the present invention are achieved by providing an image forming method usable with an image forming device having a storage medium mounting part to receive image data from a storage medium connectable in the storage medium mounting part and a displaying part to display images that correspond to the received image data, the method comprising: receiving the image data and print information data about whether the images that correspond to the image data received from the storage medium have been printed before; dividing the images into a first group and a second group according to whether the images have been printed before and displaying the images in at least one of the first and second groups of images; printing one or more images selected from among the displayed images; and updating the print information data that corresponds to the printed one or more images in the storage medium.

According to an aspect of the present invention, the displaying of the at least one of the first and second groups of images comprises displaying images that have not been printed before.

According to an aspect of the present invention, the image forming method further comprises receiving a selection of one of the first and second groups, wherein the printing of the one or more images comprises automatically printing each of the selected one or more images when the selected one of the first and second groups includes the images that have not been printed before.

According to an aspect of the present invention, the image forming method further comprises receiving a selection of one of the first and second groups, wherein the printing of the one or more images comprises automatically printing each of the selected one or more images when the selected one of the first and second groups includes the images that have not been printed before.

According to an aspect of the present invention, the print information data is stored in the corresponding image data in the storage medium.

According to an aspect of the present invention, the print information data is stored separately from the corresponding image data in the storage medium.

The foregoing and/or other aspects of the present invention are achieved by providing a method of forming an image usable by an image forming device, the method comprising receiving file information in at least one external port connected to an external memory device and managing the file information including one or more files and one or more file print histories associated with the one or more files received from the external memory device.

According to an aspect of the present invention, the file print histories comprise information regarding whether the files have been printed before.

According to an aspect of the present invention, the method further comprises displaying the one or more files and the associated one or more file print histories in a display interface according to the one or more file print histories.

According to an aspect of the present invention, the displaying of the one or more files and the associated one or more file print histories in the display interface comprises displaying a first portion including a plurality of file names and displaying a second portion including a plurality of print history indicators to correspond with the plurality of file names and to indicate whether a plurality of files identified by the plurality of file names have been printed before.

According to an aspect of the present invention, the method further comprises printing selected ones of the one or more files and updating the file print histories associated with the printed files in the external memory device.

According to an aspect of the present invention, the managing of the file information comprises dividing the one or more files stored in the external memory device into a first group of old files and a second group of new files according to the one or more file print histories associated with the one or more files.

According to an aspect of the present invention, the managing of the file information further comprises displaying the first and second groups and indicating that the files in the second group are new.

According to an aspect of the present invention, the method further comprises receiving a first selection of one of the first and second groups; and displaying the files in the selected one of the first and second groups.

According to an aspect of the present invention, the method further comprises: automatically printing all files in the second group when the second group is selected; and enabling a user to select one or more of the files in the first group for printing when the first group is selected.

According to an aspect of the present invention, the method further comprises receiving a second selection of one or more files within the selected one of the first and second groups for printing the selected one or more files; and updating the file print histories associated with the printed one or more files if the file print histories associated with the printed one or more files are changed.

According to an aspect of the present invention, the external memory device comprises one of a digital camera, a memory stick, a memory card, and an image storage device.

The foregoing and/or other aspects of the present invention are also achieved by providing an image forming device, comprising: a storage medium mounting part in which a storage medium having image data and print information data about whether images that correspond to the image data have been printed before is connectable; a selecting part to receive one or more selections; a displaying part to display the images that correspond to the image data; a printing part to print the images; a control part to receive the image data and the print information data from the storage medium, to divide the image data according to the print information data received from the storage medium according to the print information that corresponds to the images, to control the displaying part to display the images thereon, to control the printing part to print predetermined images among the images that are displayed on the displaying part according to the one or more selections, and to update the print information data of the printed images in the storage medium.

According to an aspect of the present invention, the control part controls the displaying part to display images that have not been printed before from among the images that correspond to the image data received from the storage medium.

According to an aspect of the present invention, the control part controls the printing part to automatically print images that have not been printed before according to the one or more selections.

According to an aspect of the present invention, the control part controls the printing part to automatically print images that have not been printed before according to the one or more selections.

According to an aspect of the present invention, the control part updates the print information data that corresponds to the printed predetermined images in the storage medium.

According to an aspect of the present invention, the control part updates the print information data that corresponds to the printed predetermined images in the storage medium.

The foregoing and/or other aspects of the present invention are also achieved by providing an image forming device, comprising at least one external port to connect to an external memory device and to receive file information therefrom and a control part to read the file information including one or more files and one or more file print histories associated with the one or more files received from the external memory device, when the external memory device is connected to the at least one external port.

According to an aspect of the present invention, the file print histories comprise information regarding whether the files have been printed before.

According to an aspect of the present invention, the image forming device further comprises a display part to display the one or more files and the associated one or more file print histories in a display interface under control of the control part.

According to an aspect of the present invention, the display interface comprises a first portion including a plurality of file names and a second portion including a plurality of print history indicators to correspond with the plurality of file names and to indicate whether a plurality of files identified by the plurality of file names have been printed before.

According to an aspect of the present invention, the image forming device further comprises a printing part to print selected ones of the one or more files, and the control part updates the file print histories associated with the printed files in the external memory device.

According to an aspect of the present invention, the control part divides the one or more files stored in the external memory device into a first group of old files and a second group of new files according to the one or more file print histories associated with the one or more files.

According to an aspect of the present invention, the image forming device further comprises a displaying part to be controlled by the control part to display the first and second groups and to indicate that the files in the second group are new.

According to an aspect of the present invention, the image forming device further comprises a selecting part to receive a first selection of one of the first and second groups and a displaying part to display the files in the selected one of the first and second groups.

According to an aspect of the present invention, the control part performs an automatic print function to print all files in the second group when the second group is selected in the first selection, and the selecting part enables a user to select one or more of the files in the first group for printing when the first group is selected in the first selection.

According to an aspect of the present invention, the selecting part further receives a second selection of one or more files within the selected one of the first and second groups to print, and the control part controls a printing part to print the selected one or more files and updates the file print histories associated with the printed one or more files if the file print histories associated with the printed one or more files are changed.

According to an aspect of the present invention, the external memory device comprises one of a digital camera, a memory stick, a memory card, and an image storage device.

The above and/or other aspects of the present invention will become apparent and more readily appreciated from the following description of the embodiments, taken in conjunction with the accompanying drawings of which:
Figure 1 is a perspective view illustrating a conventional printer.
Figure 2 is a block diagram illustrating an image forming device according to an embodiment of the present invention.
Figure 3 illustrates print information data displayed on a displaying part of the image forming device of Figure 2.
Figure 4 is a flow diagram illustrating a method of forming an image according to another embodiment of the present invention.

Reference will now be made in detail to the embodiments of the present invention, examples of which are illustrated in the accompanying drawings, wherein like reference numerals refer to like elements throughout.

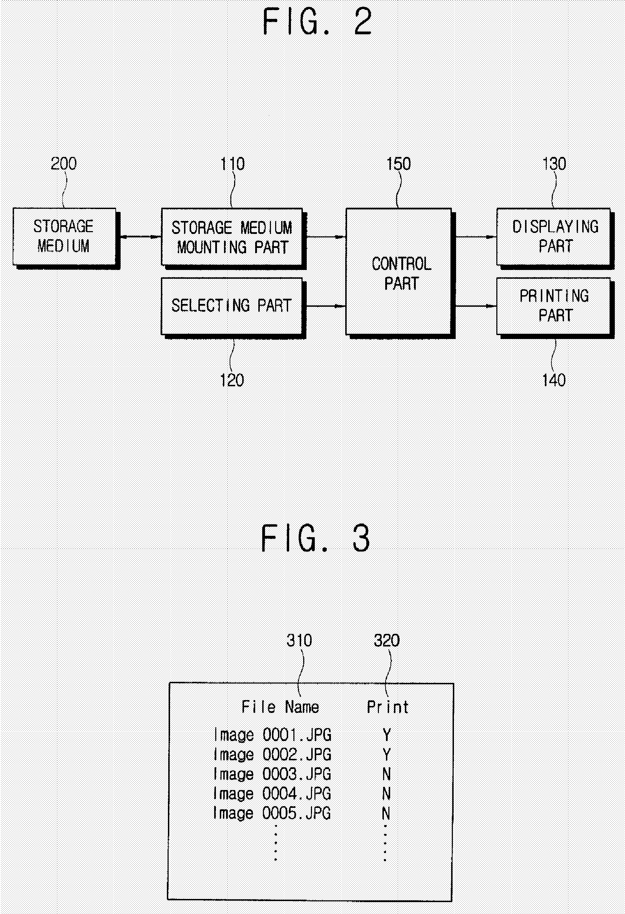

Figure 2 is a block diagram illustrating an image forming device according to an embodiment of the present invention. As illustrated in Figure 2, the image forming device comprises a storage medium mounting part 110 to which a storage medium 200 having image data and print information data is connectable, a selecting part 120 to receive a selection of images that correspond to the image data to print, a displaying part 130 to display the images, and a printing part 140 to print the selected images. The selection of the one or more images to print may be input by a user. Alternatively, the selection of the images may be automatically input according to one or more predetermined criteria or options.

The storage medium mounting part 110 receives data directly from an external device. The storage medium mounting part 110 includes an adapter to which a storage medium 200, such as a memory card or a memory stick, is connectable, and a connect port to connect to other types of storage medium 200, such as a digital camera, etc. The connect port may comprise a serial port, a parallel port, and/or a USB port. The image data stored in the storage medium 200 comprises one or more files having a predetermined digital format such as JPEG. Thus, the storage medium mounting part 110 includes the connect port and the adapter to connect to a variety of different external devices that are capable of storing the image data and/or print information data. For example, the connect port may be connectable to a first type of storage medium, and the adapter may be connectable to a second type of storage medium. Although the embodiments of the present invention are described with reference to printable images, it should be understood that other types of files may also be used with the present invention. For example, the embodiments of the present invention may be used with TIFF, GIFF, BMP, and PDF formats. Other formats may also be used.

The print information data stored in the storage medium 200 comprises information about whether the images that correspond to the image data have been printed before. In other words, the print information data indicates new images stored in the storage medium 200. For example, Figure 3 illustrates print information data displayed on the displaying part 130 of the image forming device of Figure 2. As illustrated in Figure 3, the print information data comprises file names 310 of the images that correspond to the image data stored in the storage medium 200 and print history information 320 to indicate whether the images stored in the storage medium 200 have been printed before. The print history information 320 may comprise a designation of "Y" which indicates that the image having the corresponding file name 310 has been printed before, and "N" which indicates that the images having the corresponding file name 310 has not been printed before (i.e., is a new image). The print history information 320 may include a designation to correspond to each of the file names 310.

The print information data may be stored in the storage medium 200 as an independent file separate from the image data. For example, the storage medium 200 may include a print history file that contains the print information data for all the images that are stored in the storage medium.

Alternatively, the print information data may be stored in each file of the image data or in each image. In this case, the print information data may be stored in a header part, in which a file size, a recording date, etc. are stored. For example, the print information data may be stored with a new field or an extra space in an existing field.

The displaying part 130 may comprise a colour LCD to display the images stored in the storage medium 200 in detail. The displaying part 130 may display one image at a time. Alternatively, the displaying part 130 may display a plurality of images at a time. Thus, the user can select the images to print from among the displayed images without difficulty.

When the selecting part 120 receives the selection of the images, a control part 150 retrieves the selected images from the storage medium 200, displays the selected images on the displaying part 130, and controls the printing part 140 to print the selected images. The control part 150 comprises a storing part (not shown) to store the corresponding image data and the print information data received from the storage medium 200. Additionally, according to some embodiments of the present invention, if the selected images retrieved from the storage medium 200 are not in a predetermined file format that is used in the image forming device, the control part 150 converts the selected images into the predetermined file format. For example, when the image forming device uses the JPEG file format, if the file format of the retrieved images is in the TIFF format, the GIF format, the BMP format, or another format that is different from the JPEG file format used in the image forming device, the control part 150 converts the file format of the retrieved images into the JPEG format.

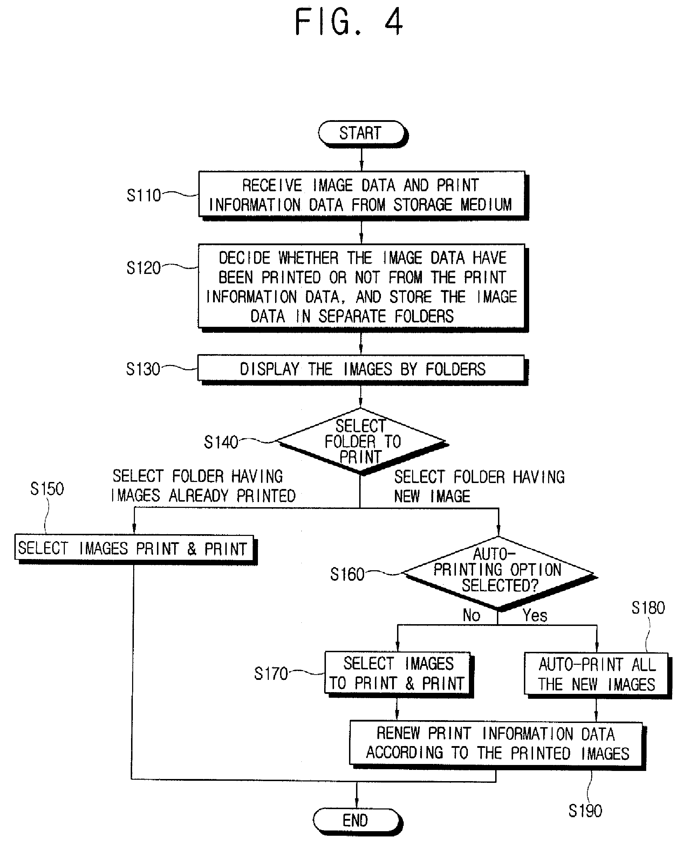

Figure 4 is a flow diagram illustrating a method of forming an image according to another embodiment of the present invention. The method of Figure 4 may be performed by the image forming device illustrated in Figure 2. Alternatively, the method of Figure 4 may be performed by other image forming devices. Thus, the method of Figure 4 is described below with reference to Figures 2 and 3. If the storage medium 200 storing the image data and the print information data is connected to the storage medium mounting part 110 and an input command to receive the image data and the print information data is received by the selecting part 120, the control part 150 retrieves the image data and the print information data from the storage medium 200 at operation S110. The control part 150 then determines whether the images that correspond to the retrieved image data have been printed before by reading the retrieved print information data at operation S120. Also at operation S120, the control part 150 generates two folders in the storing part thereof and divides the images that correspond to the retrieved image data into two groups to be stored in the two folders, respectively, according to whether the images that correspond to the retrieved image data have been printed before. Thus, the two folders comprise a first folder including images that have been printed before and a second folder including the new images that have not been printed before.

However, if the print information data does not exist in the storage medium 200 (e.g., if the storage medium 200 is newly adapted to the image forming device), the control part 150 considers all image data stored in the storage medium 200 as new image data for which the corresponding images have not been printed before.

At operation S130, the control part 150 controls the displaying part 130 to display the images in the two folders containing the images. The control part 150 may perform the operation S130 in response to a command received by the selecting part 120.

There may be various methods of displaying the images divided into the two folders at operation S130. In an exemplary embodiment of the present invention, the two folders may be displayed on the displaying part 130 and the user can select one of the two folders. The control part 150 then controls the displaying part 130 to display the images in the selected folder. In another exemplary embodiment of the present invention, all images in the two folders may be simultaneously displayed with different colours at their edges according to which of the two folders they are stored in. Alternatively, the images that have been printed before may be displayed with a shade thereon to indicate their print history. In another exemplary embodiment, only the new images may be displayed. Other methods of displaying the images to indicate which images have been printed before and which have not been printed before may also be used.

At operation S140, the user selects the folder which contains the image(s) that he/she wants to print. If the user selects the folder containing the images that have been printed before, the images in the folder are displayed on the displaying part 130. At operation S150, the user then selects the images to print from among the displayed images and inputs a command to print the selected images to the selecting part 120. Accordingly, the selected images are printed at the printing part 140 at operation S150.

If the user selects the folder containing the new images that have not been printed before, the new images are displayed on the displaying part 130 such that the user can select the images to print at operation S170. If the user selects the images and inputs a command to print the selected images, the control part 150 controls the printing part 140 to print the selected images at operation S170. However, if, at operation S160, it is determined that an auto-printing option is set, the control part 150 controls the printing part 140 to automatically print all of the new images at operation S180.

When the new images are printed at operation S170 or S180, the control part 150 updates (i.e., renews) the corresponding print information data in the storage medium 200 such that the printed new images are designated as images that have been printed before at operation S190. If the print information data to be updated does not exist in the storage medium 200, the control part 150 generates the print information data using data about the printed new images and stores the generated print information data in the storage medium 200.

The auto-printing option may be set to automatically print the new images when the user inputs the command to retrieve the image data that corresponds to the new images that have not been printed before from the storage medium 200. The print information data may be automatically updated in the storage medium 200.

The present invention may be embodied in a computer by running a program from a computer-readable medium, including but not limited to storage media such as magnetic storage media (ROMs, RAMs, floppy disks, magnetic tapes, etc.), optically readable media (CD-ROMs, DVDs, etc.), and carrier waves (transmission over the internet). The present invention may be embodied as a computer-readable medium having a computer-readable program code to cause a number of computer systems connected via a network to effect distributed processing.

Although a few embodiments of the present invention have been shown and described, it will be appreciated by those skilled in the art that changes may be made in these embodiments without departing from the principles of the invention, the scope of which is defined in the appended claims.

## Claims

1. An image forming device comprising:
means for receiving image data from an external storage medium, the image data corresponding to one or more images;
means for determining if the one or more images have been printed previously.

2. A device according to claim 1, wherein the determining means is arranged to read print history information associated with an image to determine if the image has been printed previously.

3. A device according to claim 1 or 2, wherein the determining means is arranged to determine that an image has not been printed before if there is no print history information associated with the image.

4. A device according to any one of the preceding claims, wherein the image data receiving means comprises a storage medium mounting part connectable to a storage medium that includes image data and print history information about whether images that correspond to the image data have been printed before, the device further comprising:
a display for displaying the images that correspond to the image data;
a printing module for printing the images; and
a controller operable to receive the image data and the print history information from the storage medium, to divide the image data in accordance with the print history information, to display the images and to control the printing module to selectively print predetermined images from among the displayed images.

5. A device according to claim 4, wherein the control module is arranged to display images that have not been printed before from among the images that correspond to the image data received from the storage medium.

6. A device according to claim 4 or 5, wherein the control module controls the printing module to automatically print images that have not been printed before.

7. A device according to any one of claims 4 to 6, wherein the control module is arranged to update the print history information that corresponds to the printed predetermined images in the storage medium.

8. A device according to any one of the preceding claims, wherein the receiving means comprises at least one external port to connect to an external memory device and to receive file information therefrom.

9. A device according to any one of claims 4 to 7, wherein the image data is stored as a plurality of files and the controller is arranged to divide the files into a first group of previously printed files and a second group of files that have not been previously printed according to the print history information associated with the files.

10. A device according to claim 9, further comprising means for displaying the first and second groups and for indicating that the files in the second group have not been previously printed.

11. A device according to claim 10, further comprising:
means for receiving a first selection of one of the first and second groups.

12. A device according to claim 11, wherein the controller is arranged to perform an automatic print function to print all files in the second group when the second group is selected in the first selection, and the selecting part enables a user to select one or more of the files in the first group for printing when the first group is selected in the first selection.

13. A device according to 11 or 12, wherein the selection receiving means further receives a second selection of one or more files within the selected one of the first and second groups to print, and the controller is arranged to control the printing module to print the selected one or more files and to update the file print histories associated with the printed one or more files if the file print histories associated with the printed one or more files are changed.

14. A device according to any one of the preceding claims, wherein the external storage medium comprises one of a digital camera, a memory stick, a memory card, and an image storage device.

15. An image forming method for use with an image forming device, the method comprising:
receiving image data from an external storage medium, the image data corresponding to one or more images;
determining if the one or more images have been printed previously.

16. A method according to claim 15, wherein the image forming device has a storage medium mounting part to receive image data from a storage medium connectable to the storage medium mounting part and a display for displaying images that correspond to the received image data, the method comprising:
receiving the image data and print history information about whether the images that correspond to the image data received from the storage medium have been printed before;
dividing the images into a first group and a second group according to whether the images have been printed before and displaying the images in at least one of the first and second groups of images;
printing one or more images selected from among the displayed images; and
updating the print information data that corresponds to the printed one or more images in the storage medium.

17. A method according to claim 16, wherein the displaying of the at least one of the first and second groups of images comprises displaying images that have not been printed before.

18. A method according to claim 17, further comprising:
receiving a selection of one of the first and second groups,
wherein the printing of the one or more images comprises automatically printing each of the selected one or more images when the selected one of the first and second groups includes the images that have not been printed before.

19. A method according to claim 16, 17 or 18, further comprising:
receiving a selection of one of the first and second groups,
wherein the printing of the one or more images comprises automatically printing each of the selected one or more images when the selected one of the first and second groups includes the images that have not been printed before.

20. A method according to any one of claims 16 to 19, wherein the print history information is stored in the corresponding image data in the storage medium.

21. A method according to any one of claims 16 to 19, wherein the print history information is stored separately from the corresponding image data in the storage medium.
